# FASCICULE DE BREVET EUROPEEN

(11) **EP 0 642 119 B1**
(45) Date de publication et mention de la délivrance du brevet: **27.01.1999**
(21) Numéro de dépôt: 94401956.1
(22) Date de dépôt: 02.09.1994
(51) Int. Cl.: G11B 5/60

(54) **Patin de vol à profil perfectionné**
Gleitkörper mit verbessertem Profil
Slider with improved profile

(30) Priorité: 06.09.1993 FR 9310559
(43) Date de publication de la demande: 08.03.1995
(73) Titulaire: COMMISSARIAT A L'ENERGIE ATOMIQUE, 75015 Paris (FR); SILMAG S.A., 38054 Grenoble Cédex 9 (FR)
(72) Inventeur: Lazzari, Jean-Pierre, F-38700 Corenc (FR); Pisella, Christian, F-38140 Rives-sur-Fure (FR)
(74) Mandataire: Signore, Robert

(56) Documents cités:
- EP-A- 0 458 444
- US-A- 4 984 114
- PATENT ABSTRACTS OF JAPAN vol. 16, no. 243 (P-1364) 4 Juin 1992 & JP-A-04 053 075 (SONY CORP.) 20 Février 1992
- PATENT ABSTRACTS OF JAPAN vol. 17, no. 369 (P-1572) 12 Juillet 1993 & JP-A-05 054 580 (HITACHI LTD.) 5 Mars 1993
- PATENT ABSTRACTS OF JAPAN vol. 17, no. 314 (P-1557) 15 Juin 1993 & JP-A-05 028 685 (HITACHI LTD) 5 Février 1993

## Description

### Domaine technique

La présente invention a pour objet un patin de vol à profil perfectionné. Elle trouve une application dans la lecture et/ou l'écriture d'informations sur un support magnétique, en particulier sur des disques durs.

### Etat de la technique antérieure

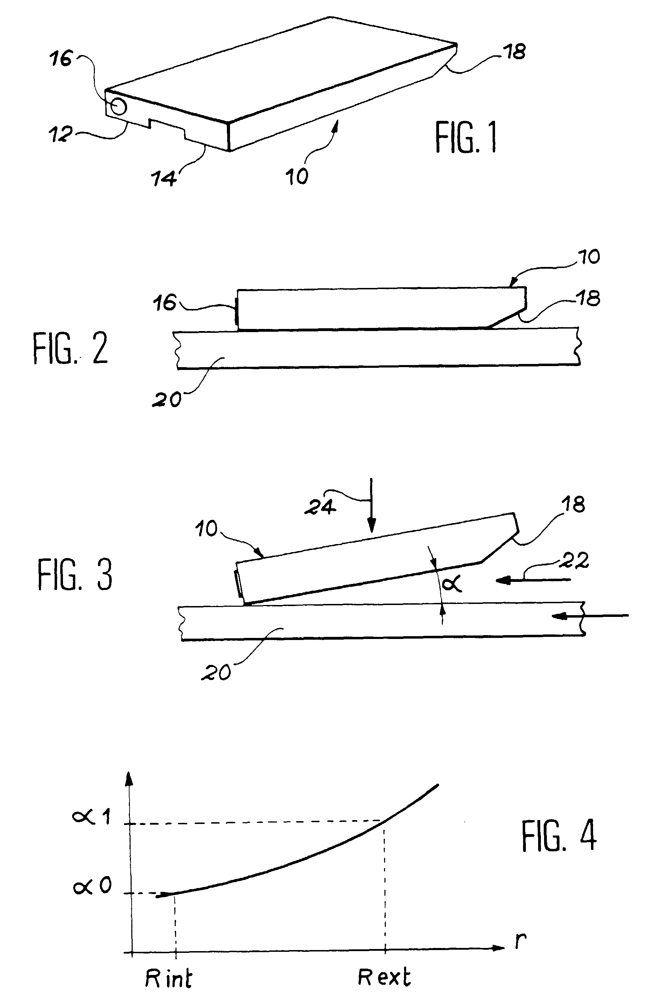

Les figures 1 à 8 annexées permettent d'exposer l'état de la technique relatif aux patins de vol et plus particulièrement de décrire le problème technique lié au décollage des patins et à leur comportement en cours de fonctionnement.

La figure 1, tout d'abord, rappelle très schématiquement la structure d'un patin de vol. Ce patin porte la référence 10 et comprend, sur la face destinée à être placée en regard du support d'enregistrement, deux rails (ou "skis") 12 et 14. Une tête magnétique de lecture et/ou d'écriture 16 est placée à l'arrière de la tête. Cette tête peut être placée sur la tranche du patin (comme représenté) ou sur la face inférieure de l'un des patins. Par ailleurs, à l'avant de chaque rail se trouve un chanfrein 18.

La figure 2 montre un tel patin en position de repos sur un support d'enregistrement 20 qui est supposé être un disque dur. Lorsque le disque est au repos, le patin est en contact avec le disque.

Quand le disque commence à tourner, le patin frotte sur le disque. Dès que la vitesse atteint un certain seuil (appelé vitesse de décollage), un filet d'air s'engouffre sous le chanfrein 18 créant ainsi une force de sustentation qui fait décoller le patin. C'est ce qui est illustré sur la figure 3 où le flux d'air est référencé 22.

Lorsque la vitesse de rotation du disque atteint sa vitesse nominale, le patin se trouve en équilibre dynamique, entre la force de sustentation qui agit sur le chanfrein et les rails, d'une part, et une force d'appui (schématisée par la flèche 24) provoquée, sur l'autre face du patin, par un ressort, non représenté et qui applique une force de 3 à 5g au patin.

L'angle α que fait le patin par rapport au disque doit être le plus grand possible au moment du décollage, pour assurer un décollage rapide de la tête et éviter que le frottement de la tête sur le disque ne se prolonge.

Cependant, si l'angle α est trop grand, la stabilité en vol de la tête se dégrade.

Il faut donc trouver un compromis entre ces antagonismes. En pratique, l'angle α est fixé à quelques microradians.

Par ailleurs, il faut observer qu'un patin de vol est situé, avant le décollage, au-dessus des pistes intérieures du disque, c'est-à-dire côté centre du disque, là où la vitesse tangentielle du disque est la plus faible (à vitesse angulaire donnée). Le décollage a donc lieu à des vitesses faibles.

Il conviendrait donc de donner au chanfrein 18 une grande dimension pour assurer un décollage rapide de la tête. Cependant, lorsque la tête se déplace vers les pistes médianes ou extérieures du disque, la vitesse tangentielle augmente, ce qui aura pour effet de soulever d'avantage le patin, d'augmenter l'angle α et donc de rendre le vol de la tête instable.

La figure 4 montre l'évolution de l'angle α en fonction du rayon r de la piste survolée.

L'angle α1, obtenu pour le rayon extérieur Rext, est l'angle maximum que l'on peut tolérer pour un vol correct de la tête. L'angle α0 est l'angle obtenu pour le rayon intérieur Rint. Si l'on avait optimisé le chanfrein pour obtenir la valeur α1 pour le rayon intérieur, on aurait certes obtenu un décollage rapide de la tête pour le rayon intérieur, mais dès que la tête se serait déplacée vers les plages extérieures, l'angle α aurait atteint des valeurs hors norme et la stabilité du patin se serait trouvée compromise.

Il faut observer encore que, pour obtenir la sustentation nécessaire au décollage, un chanfrein à l'avant des rails n'est pas la seule solution. On peut aussi usiner une marche (ou décrochement), ce qui est souvent plus simple.

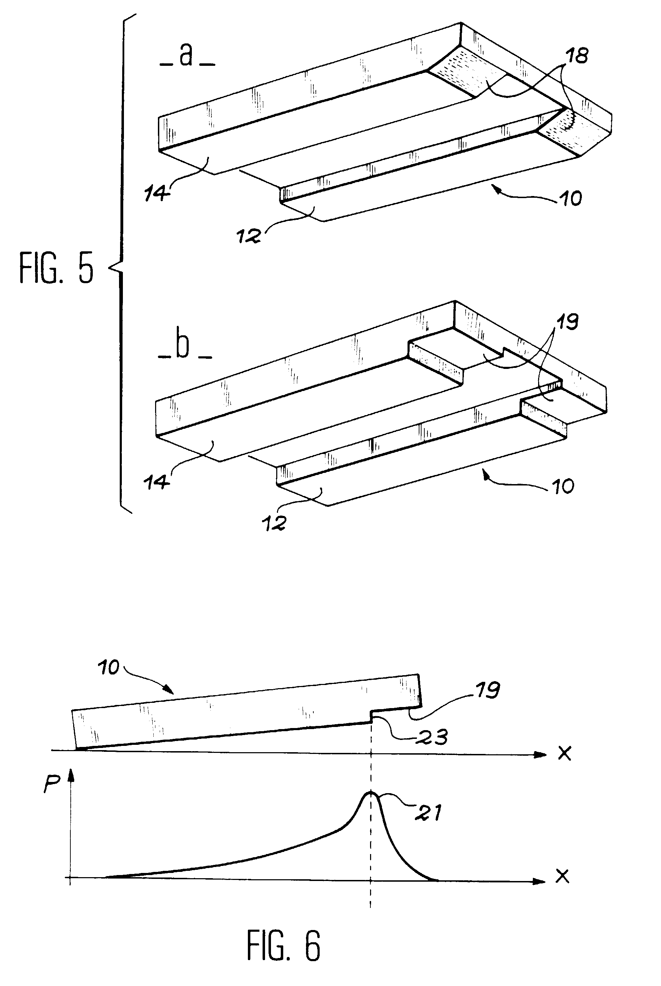

La figure 5 montre ainsi, schématiquement, deux modes de réalisation de patin de vol, soit avec chanfrein 18, soit avec marche 19.

De tels patins sont décrits dans de nombreux documents. On peut citer le brevet américain US-A-4,673,996 ainsi que la demande de brevet européen EP-A-0 543 690.

La présence d'une marche à l'avant des rails a pour effet de créer une surpression sous le rail. Cette surpression est localisée très près de la marche. C'est ce que montre la figure 6, où le diagramme du bas montre la surpression P le long de l'axe longitudinal du rail et la figure du haut la position du patin. On voit que la surpression passe par un maximum 21 au niveau de la contremarche 23 du décrochement avant.

Afin d'optimiser l'efficacité de la marche, il convient d'adapter la hauteur de celle-ci (c'est-à-dire la hauteur de la contremarche) à la vitesse relative disque-patin à laquelle on souhaite créer la surpression.

Ainsi, à faible vitesse, par exemple de l'ordre de 3m/s, la hauteur de la marche sera de l'ordre de 100 nm.

A une vitesse de l'ordre de 10 m/s, la hauteur de la marche sera de l'ordre de 800 nm.

Dans le cas fréquent où un patin doit décoller en piste interne d'un disque (là où la vitesse est faible), une marche de faible hauteur permettra de créer la surpression appropriée au décollage. Mais lorsque la vitesse du disque aura atteint sa vitesse nominale, la marche à faible hauteur perdra son efficacité. Une marche de plus forte hauteur aurait présenté une meilleure efficacité.

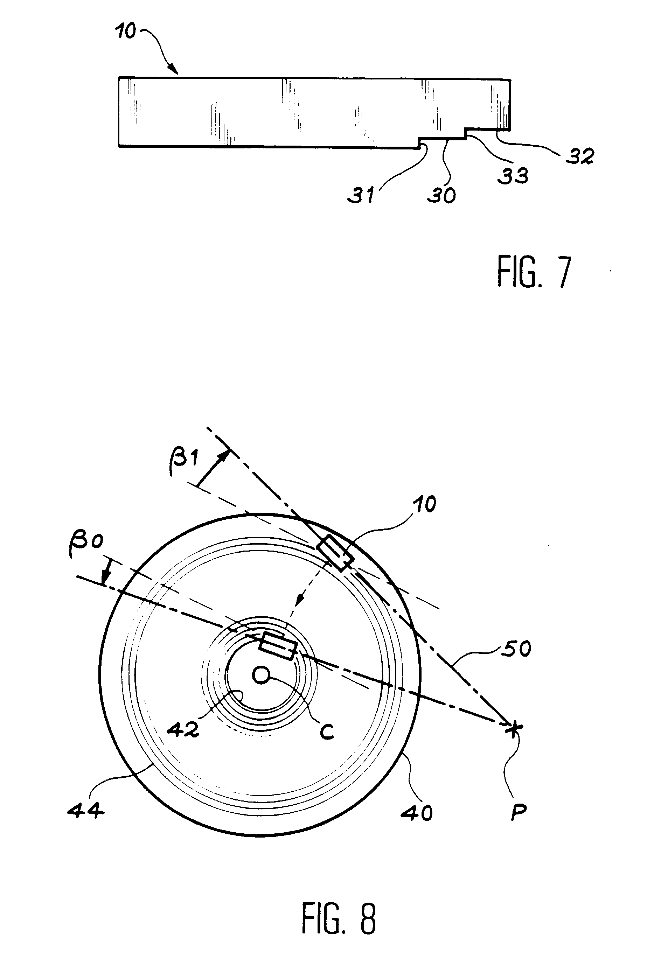

C'est la raison pour laquelle il a été proposé de munir la partie avant des rails de deux marches et non plus d'une. C'est ce qui est représenté sur la figure 7, où l'on voit une première marche 30 avec sa contremarche 31 et une seconde marche 32, avec sa contremarche 33.

Ces deux marches assurent à la fois un décollage correct au-dessus des pistes intérieures et une inclinaison convenable au-dessus des pistes extérieures.

Un patin de vol à deux marches est décrit dans le brevet américain US-A-3 488 648. Il convient de noter que ce patin a un principe de fonctionnement différent en ce que lorsque le disque ne tourne pas, il est éloigné du disque par un soufflet, et lorsque le disque tourne, le patin se rapproche du disque grâce aux deux marches créant une suppression sous le patin et grâce à un trou propageant la suppression à l'intérieur du soufflet.

### Exposé de l'invention

L'objet de l'invention est un patin de vol, qui utilise encore la disposition connue à deux marches, mais qui permet un décollage encore plus rapide à plus faible vitesse de la tête, sans donner pour autant, à grande vitesse (piste extérieure, vitesse de rotation nominale), un angle trop important qui serait préjudiciable à la stabilité en vol de la tête.

En quelque sorte, l'invention permet d'obtenir, en piste intérieure et à faible vitesse, un angle proche de la valeur optimale α1, et de conserver cet angle en piste extérieure et à grande vitesse.

Le fait d'avoir un angle α1 en piste intérieure, permet un décollage plus rapide de la tête, ce qui lui évite un frottement prolongé sur le disque et réduit l'usure.

A cette fin, l'invention préconise de donner aux deux marches un profil particulier, à savoir une certaine obliquité par rapport à la direction transversale du rail. Dans l'art antérieur, la ou les contremarche(s) était (étaient) toujours transversale(s). Or, la direction des filets d'air sous le rail n'est pas toujours perpendiculaire à la contremarche, en raison de ce que le patin de vol n'est pas toujours dirigé tangentiellement aux pistes. L'invention tire parti de cette observation en inclinant les contremarches par rapport à la direction transversale du patin, de telle sorte que les conditions de sustentation soient optimales tant au moment du décollage (lorsque le patin est au-dessus des pistes intérieures) qu'en vol normal (lorsque le patin est au-dessus de pistes plus extérieures).

Au lieu de parler de l'obliquité des contremarches par rapport à la direction transversale des rails, on peut parler de l'inclinaison des contremarches par rapport à la direction longitudinale du patin : cette inclinaison n'est plus de 90° comme dans l'art antérieur mais est plus faible. On choisira un angle compris entre 10° et 60° pour la première contremarche (par exemple 30° ou 45°) et un angle compris entre environ 20° et 80° pour la seconde (par exemple 45° ou 60°).

De façon précise, la présente invention a donc pour objet un patin de vol pour enregistrement magnétique, comprenant au moins un rail avec une partie avant et une partie arrière, des moyens de lecture et/ou d'écriture placés à l'arrière du patin, la partie avant de chaque rail comprenant une première et une seconde contre marches avec, respectivement, une première et une seconde marches superposées, ce patin de vol étant caractérisé par le fait que la première contremarche de la première marche fait, avec la direction longitudinale du rail, un premier angle compris entre environ 10° et environ 60° et par le fait que la seconde contremarche de la seconde marche fait avec la direction longitudinale du rail un second angle différent du premier et compris entre environ 20° et environ 80°, les premier et second angles étant mesurés dans le même sens trigonométrique.

De manière avantageuse, la hauteur de la première contremarche est comprise entre environ 20 nm et environ 200 nm et la hauteur de la seconde contremarche est comprise entre environ 200 nm et environ 2 µm.

Dans l'invention, la tête de lecture et/ou d'écriture est située à l'arrière du patin, soit sur la tranche du patin, comme représenté sur la figure 1, soit intégrée sur l'un des rails, comme décrit dans le document EP-A-0 543 690 déjà cité. De telles têtes s'obtiennent par des techniques de dépôts et gravures de couches minces empruntées à la technologie de la microélectronique.

Le patin de vol de l'invention peut ne comprendre qu'un seul rail ou en comprendre deux ou même plus.

S'il comprend plusieurs rails, le patin peut comprendre une ou plusieurs têtes de lecture et/ou d'écriture.

Par ailleurs, divers décrochements, chanfreins, etc... peuvent être prévus autour des rails ou à l'arrière, selon des dispositions décrites dans les documents US'996 et EP'690 cités plus haut.

### Brève description des dessins

- la figure 1 représente la structure générale d'un patin de vol ;
- la figure 2 montre un patin de vol reposant sur un support d'enregistrement ;
- la figure 3 illustre le décollement d'un patin de vol ;
- la figure 4 montre la variation de l'inclinaison du patin de vol en fonction de sa position le long du rayon du disque d'enregistrement ;
- la figure 5 montre des patins de vol à chanfreins et à marches ;
- la figure 6 montre la répartition de la surpression sous un rail présentant une marche à sa partie avant ;
- la figure 7 montre un patin de vol à deux marches ;
- la figure 8 illustre la variation d'orientation d'un patin de vol par rapport à une direction tangentielle à un disque, selon la place du patin de vol par rapport au disque ;
- la figure 9 montre un patin de vol selon l'invention en vue de dessous ;
- la figure 10 montre une vue en perspective de l'extrémité avant d'un rail conforme à l'invention ;
- la figure 11 montre la variation de l'angle d'inclinaison d'un patin de vol conforme à l'invention en fonction de son emplacement radial sur le disque.

### Exposé détaillé de modes de réalisation

La figure 8 montre un disque dur 40 avec un centre C et des pistes d'enregistrement comprises entre une circonférence intérieure 42 de rayon Rint et une circonférence extérieure 44 de rayon Rext.

Un dispositif de soutien d'un patin de vol 10, non représenté en détail, comprend un bras 50 articulé autour d'un point de pivotement P.

Lorsque le patin est situé dans la zone centrale du disque, la direction longitudinale du patin fait un angle β0 d'environ -6° par rapport à la tangente à la piste d'enregistrement. Lorsque le patin se trouve à la périphérie du disque. La direction longitudinale du patin fait un angle β1 avec la tangente à la piste d'environ 15° (les angles sont comptés positivement dans le sens trigonométrique en partant de la direction tangentielle).

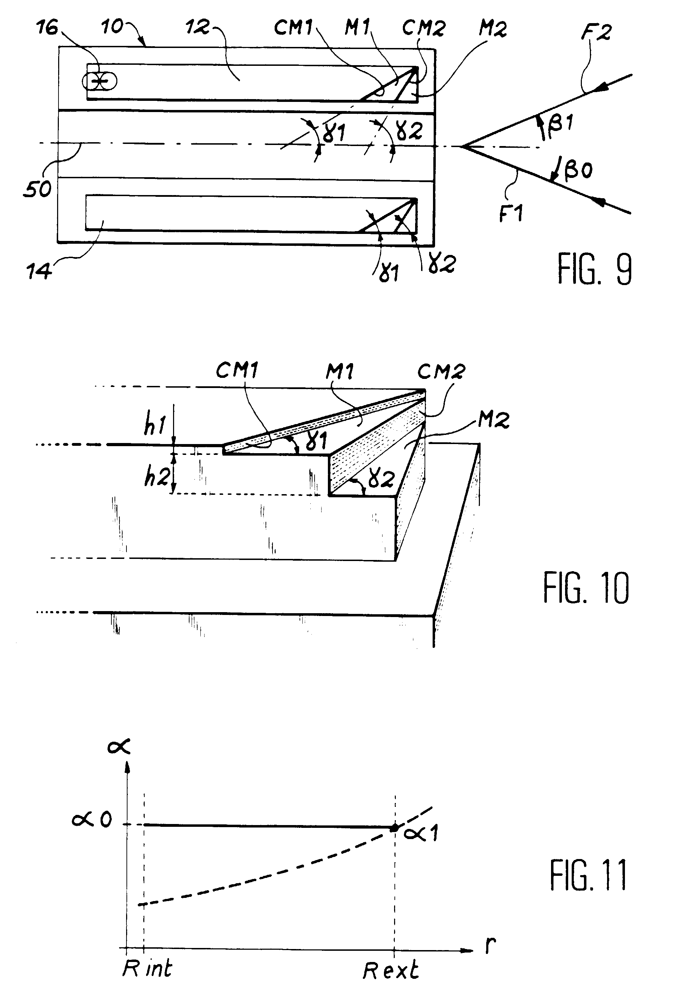

Sur la figure 9, on voit un patin de vol 10 avec deux rails 12 et 14 et une tête de lecture et/ou d'écriture 16. Selon l'invention, le patin comprend deux marches obliques situées à l'avant de chaque rail, à savoir une première marche M1 avec sa contremarche CM1 et une seconde marche M2 avec sa contremarche CM2. Cette figure montre également l'orientation des contremarches CM1 et CM2 par rapport à la direction longitudinale 50 du patin (ou, ce qui revient au même, de chaque rail) : la première contremarche CM1 fait un angle γ1 par rapport à cette direction et la seconde CM2 un angle γ2.

La figure 9 montre également la direction des flux d'air agissant sur les patins. Lorsque le patin est en position intérieure, le flux d'air F1 fait un angle β0 (de -6° environ) avec la direction longitudinale, conformément à ce qui a été dit à propos de la figure 8. Lorsque le patin est en position extérieure, le flux F2 fait la direction β1 (de 15° environ) avec cette même direction.

La figure 10 représente plus en détail la forme des deux marches et montre clairement l'inclinaison des contremarches CM1 et CM2. Sur cette figure, les dimensions ne sont pas à l'échelle (dans la pratique, la seconde marche est environ 10 fois plus haute que la première).

Le fonctionnement du patin de vol de l'invention est alors le suivant.

En position intérieure, au-dessus des pistes situées près du centre du disque, l'air entraîné par la rotation du disque, rencontre la contremarche CM1 qui, du fait de son inclinaison, a une grande largeur et forme un front efficace face à la direction F1 de l'air. Ce front n'est pas situé à 90° par rapport à l'axe du flux comme dans l'art antérieur ce qui rendrait sa largeur trop faible et diminuerait son efficacité.

La première marche est donc particulièrement efficace lors du décollage.

En position extérieure, le flux d'air prend la direction F2 inclinée d'un angle β1 et la contremarche CM1 n'est plus attaquée frontalement comme avec le flux F1 mais quasi tangentiellement. C'est alors la seconde contremarche CM2 qui vient jouer son rôle. Mais sa largeur est plus faible que celle de la première et son inclinaison par rapport au flux F2 n'est pas très importante. Pour ces deux raisons, la seconde marche, qui joue le rôle le plus important lors du vol de la tête au-dessus des parties périphériques du disque, maintiendra l'inclinaison du patin à une valeur convenable et évitera les inclinaisons trop importantes qui affecteraient la stabilité du patin.

Les hauteurs h1 et h2 des contremarches CM1, CM2 sont réglées selon les conditions d'utilisation mais sont généralement comprises entre 20 et 200 nm pour la première et 0,2 à 2 µm pour la seconde.

Enfin, la figure 11 montre la variation de l'angle d'inclinaison α d'un patin de vol selon l'invention en fonction de la position radiale de celui-ci sur le disque. Lorsque le patin est situé vers le centre (à Rint), l'angle α0 est déjà élevé (plus élevé que dans l'art antérieur (cf la figure 4 dont la courbe a été reportée en tireté sur la figure 11), ce qui permet un décollage très rapide du patin en dépit de la faible vitesse. Mais cet angle ne change pratiquement pas lorsque le patin s'éloigne du centre et atteint des régions périphériques (vers Rext) où la vitesse est beaucoup plus grande. La valeur α1 obtenue à l'extérieur est égale ou sensiblement égale à α0.

Pour obtenir le profil particulier des marches de l'invention, tout procédé connu d'usinage ou, plus avantageusement, de gravure peut être utilisé. On pourra opérer à travers des masques posés sur les rails. Il semble avantageux de graver d'abord la seconde marche à travers un premier masque, puis de réaliser, à travers un second masque, la première marche tout en achevant de graver la seconde.

## Revendications

1. Patin de vol pour enregistrement magnétique, comprenant au moins un rail (12, 14) avec une partie avant et une partie arrière, des moyens (16) de lecture et/ou d'écriture placés à l'arrière du patin, la partie avant de chaque rail comprenant une première (31) et une seconde (33) contremarches avec, respectivement, une première (30) et une seconde (32) marches superposées, ce patin de vol étant caractérisé par le fait que la première contremarche (CM1) de la première marche (M1) fait, avec la direction longitudinale (50) du patin un premier angle (γ1) compris entre environ 10° et environ 60° et par le fait que la seconde contremarche (CM2) de la seconde marche (M2) fait avec la direction longitudinale (50) du patin un second angle (γ2) différent du premier (γ1) et compris entre environ 20° et environ 80°, les premier et second angles étant mesurés dans le même sens trigonométrique.

2. Patin de vol selon la revendication 1, caractérisé par le fait que la hauteur (h1) de la première contremarche (CM1) est comprise entre environ 20 nm et environ 200 nm et par le fait que la hauteur (h2) de la seconde contremarche (CM2) est comprise entre environ 200 nm et environ 2 µm.

## Patentansprüche

1. Gleitkörper zur magnetischen Aufzeichnung, wenigstens eine Schiene (12, 14) mit einem vorderen Teil und einem hinteren Teil sowie hinter dem Gleitkörper angeordnete Lese- und/oder Schreibeinrichtungen (16) umfassend, wobei der vordere Teil jeder Schiene eine erste (31) und eine zweite (33) Abstufung mit übereinanderliegenden Stufen aufweist, einer ersten (30) und einer zweiten (32), und dieser Gleitkörper dabei
**dadurch gekennzeichnet** ist, daß die erste Abstufung (CM1) der ersten Stufe (M1) mit der Längsrichtung (50) des Gleitkörpers einen ersten Winkel (γ1) bildet, enthalten zwischen ungefähr 10° und ungefähr 60°, und dadurch, daß die zweite Abstufung (CM2) der zweiten Stufe (M2) mit der Längsrichtung (50) des Gleitkörpers einen zweiten, vom ersten (γ1) verschiedenen Winkel (γ2) bildet, enthalten zwischen ungefähr 20° und ungefähr 80°, wobei der erste und der zweite Winkel in derselben trigonometrischen Richtung gemessen werden.

2. Gleitkörper nach Anspruch 1, dadurch gekennzeichent, daß die Höhe (h1) der ersten Abstufung (CM1) enthalten ist zwischen ungefähr 20nm und ungefähr 200nm, und dadurch, daß die Höhe (h2) der zweiten Abstufung (CM2) enthalten ist zwischen ungefähr 200nm und ungefähr 2µm.

## Claims

1. Slider for magnetic recording, comprising at least one ski (12, 14) with a front portion and a rear portion, read and/or write means (16) located to the rear of the slider, the front portion of each ski having a first (31) and a second (33) risers with, respectively, a first (30) and a second (32) superimposed steps, said slider being characterized in that the first riser (CM1) of the first step (M1) forms with the longitudinal direction (50) of the ski a first angle (α1) between approximately 10° and approximately 60° and in that the second riser (CM2) of the second step (M2) forms with the longitudinal direction (50) of the ski a second angle (α2), which differs from the first (α1), and is between approximately 20° and approximately 80°, the first and second angles being measured in the same trigonometric direction.

2. Slider according to claim 1, characterized in that the height (h1) of the first riser (CM1) is between approximately 20 nm and approximately 200 nm and in that the height (h2) of the second riser (CM2) is between approximately 200 nm and approximately 2 µm.
